# EUROPEAN PATENT SPECIFICATION

(11) **EP 3 977 267 B1**
(45) Date of publication and mention of the grant of the patent: **17.09.2025**
(21) Application number: 19730111.2
(22) Date of filing: 29.05.2019
(51) Int. Cl.: G06F 8/65, G06F 11/14

(54) **REMOTE UPDATE OF DEVICES**
FERNAKTUALISIERUNG VON GERÄTEN
MISE À JOUR À DISTANCE DE DISPOSITIFS

(43) Date of publication of application: 06.04.2022
(73) Proprietor: TELEFONAKTIEBOLAGET LM ERICSSON (PUBL), 164 83 Stockholm (SE)
(72) Inventor: RAMKULL, Joachim, 224 60 LUND (SE)
(74) Representative: Ericsson
(86) International application number: PCT/EP2019/064058
(87) International publication number: WO 2020/239219

(56) References cited:
- MORAN ARM LIMITED M MERIAC CONSULTANT H TSCHOFENIG ARM LIMITED D BROWN LINARO B: "A Firmware Update Architecture for Internet of Things Devices; draft-ietf-suit-architecture-05.txt", no. 5, 9 April 2019 (2019-04-09), pages 1 - 25, XP015132405, Retrieved from the Internet <URL:https://tools.ietf.org/html/draft-ietf-suit-architecture-05> [retrieved on 20190409]
- SABRI KHEMISSA: "Recommendations for IoT Firmware Update Processes", 1 January 2018 (2018-01-01), XP055666286, Retrieved from the Internet <URL:https://downloads.cloudsecurityalliance.org/assets/research/internet-of-things/recommendations-for-iot-firmware-update-processes.pdf> [retrieved on 20200207]

## Description

### TECHNICAL FIELD

The present disclosure relates generally to the field of remote update of devices. More particularly, it relates to remote update of a plurality of devices wherein the plurality of devices form a distributed system for memory usage.

### BACKGROUND

At remote update of a device, e.g. software update, the device may store the previous version installed in the device for rollback purposes e.g. if the update fails.

A drawback of storing the previous version in the device is that the previous version requires a substantial amount of memory which cannot be used for other purposes.

For devices with limited memory capacity, e.g. Internet of Things (IoT) devices, this substantial amount of occupied memory poses a problem.

Another drawback of storing the previous version in the device is that the memory for storing the previous version must be sized to accommodate rollback of e.g. software of increasing size until the update of the device is no longer supported.

Since a new version of e.g. software is usually larger than the previous, increasing memory capacity is required to handle rollback of the previous version.

Therefore, there is a need for alternative approaches for remote update of devices.

MORAN ARM LIMITED M MERIAC CONSULTANT H TSCHOFENIG ARM LIMITED D BROWN LINARO B: "A Firmware Update Architecture for Internet of Things Devices; draft-ietf-suit-architecture-05.txt- A FIRMWARE UPDATE ARCHITECTURE FOR INTERNET OF THINGS DEVICES; DRAFT -lETE-SUIT-ARCHITECTURE-O5.TXT; INTERNET-DRAFT: SUIT, INTERNET ENGINEERING TASK FORCE, IETF, STADARDWORKINGDRAFT, INTERNET SOCIETY, no 5, 9th of April 2019 (2019-04-09), teaches aspects of updating firmware in internet of things devices.

Sabri Kjemissa: "Recommendations for IoT Firmware Update Processes, 1 January 2018 (2018-01-01) teaches updating firmware in internet of things devices and rules for a possible rollback of the last known and trusted configuration from an upstream data repository.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like. It is an object of some embodiments to solve or mitigate, alleviate, or eliminate at least some of the above or other disadvantages.

According to a first aspect, this is achieved by a method for remotely updating a plurality of devices wherein the plurality of devices form a distributed system for memory usage as per the appended claims.

The method comprises receiving, at a first device of the plurality of devices, a software package for an update from a remote unit, and obtaining, by the first device, information to store one or more local portions of a software image locally in the first device wherein the one or more local portions each comprises a defined portion of a current version of software executing in the first device.

The method further comprises storing, in the first device, the one or more local portions of the software image in memory.

In some embodiments, the method further comprises performing an attempt to install the received software package in the first device to implement the update, and when the update fails, performing rollback to the software image based on the one or more local portions of the software image stored in the first device and one or more remaining portion of the software image by requesting the one or more remaining portion of the software image from one or more second devices of the plurality of devices and reinstalling a re-assembled software image in the first device.

In some embodiments, the method further comprises authenticating, by the first device, the one or more second devices comprising the one or more remaining portion of the software image.

In some embodiments, the method further comprises requesting, by the first device, the one or more remaining portion of the software image from the one or more second devices comprising the one or more remaining portion of the software image when the authentication is successful.

In some embodiments, the method further comprises confirming successful installation to the remote unit when the installation attempt of the software package succeeded, or confirming installation failure and rollback to the remote unit when the installation attempt of the software package failed and rollback was performed.

In some embodiments, at least one device of the plurality of devices acts as a relay node for transmission of signals to and from at least one device of the plurality of devices.

In some embodiments, the at least one device of the plurality of devices comprises any one of an Internet of Things device, a sensor, and a WiFi hotspot.

In some embodiments, the devices in the distributed system communicate with each other over a short-range wireless communication protocol or a wired connection.

A second aspect is a method for remotely updating a plurality of devices wherein the plurality of devices form a distributed system for memory usage as per the appended claims.

The method comprises selecting a group of devices for an update wherein the devices in the group each comprise a software image of a same current version of software executing in the devices, and determining one or more local portions of the software image for a device of the group to store in memory.

The method further comprises transmitting a signal to the device comprising information about the one or more local portions of the software image to store, and executing the determining and the transmitting steps for each device in the group of devices.

In some embodiments, the selecting, determining, and transmitting steps are performed by a remote unit.

In some embodiments, the selecting, determining and transmitting steps are performed by a device of the distributed system.

In some embodiments, the signal comprises information about the local portion of the software image to store further comprises information about the one or more remaining portion of the software image and their storage in the distributed system.

In some embodiments, the remote unit comprises a host or a host comprising a server.

In some embodiments, the host and at least one device in the distributed system communicate with each other over a long-range wireless communication protocol or a wired connection.

In some embodiments, the second aspect further comprises one or more features as described for the first aspect.

In some embodiments, the first aspect further comprises one or more features as described for the second aspect.

A fourth aspect is an apparatus being a remote unit configured for remotely updating a plurality of devices wherein the plurality of devices form a distributed system for memory usage as per the appended claims.

The apparatus comprises controlling circuitry configured to cause selection of a group of devices for an update wherein the devices in the group comprise a software image of a same current version of software executing in the devices, and determination of a respective local portion of the software image for each of the devices of the group to store in memory.

The controlling circuitry is further configured to cause transmission of a signal to each of the devices of the group comprising information about the local respective portion of the software image.

In some embodiments, the determining of the local portion of the software image to be stored further comprises assessing available memory in each device of the distributed system.

In some embodiments, the group of devices comprises at least two devices with the same current version of software executing in the devices and capable of communicating with each other.

A fifth aspect is a first device configured for remote updating wherein the first device forms part of a distributed system for memory usage as per the appended claims.

The first device comprises controlling circuitry configured to cause reception of a software package for an update from a remote unit, and obtainment of information to store one or more local portions of a software image locally in the first device wherein the one or more local portions each comprises a defined portion of a current version of software executing in the first device.

The controlling circuitry is further configured to cause storage of the one or more local portions of the software image in memory.

In some embodiments, any of the above aspects may additionally have features identical with or corresponding to any of the various features as explained above for any of the other aspects.

An advantage of some embodiments is that alternative approaches for remote update of devices are provided.

Another advantage of some embodiments is that when applying the resource-saving update approach, less memory capacity is required in a device for storing the previous version for roll-back purposes.

Yet an advantage of some embodiments is that, even if the size of the update, i.e. the software package to be installed, grows over time, the device can still manage the storing of the previous version for roll-back purposes without increasing the memory capacity of the device and more devices, if possible, may be involved in the storing of the previous version. Yet another advantage of some embodiments is that a secure distributed system for memory usage is provided.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a sequence diagram illustrating example signaling steps according to some embodiments,
Figure 3 is a schematic overview illustrating an example system according to some embodiments,
Figure 4 is a schematic block diagram illustrating example apparatuses according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

As mentioned above, at remote update of a device, the device may store the previous version (e.g., software) installed in the device for rollback purposes if the update fails.

An example of a remote update of a device may comprise storing the previous version installed in the device and also be able to receive and store an update package which likely increases in size for each new version.

In the event that the device has not stored the previous version installed in the device at installation of an update wherein the installation attempt fails, the device may be able to download the previous version from a remote unit. However, this would require network resources as well as power from the network and may be both energy and time consuming for both network and device and especially so if several devices fail the installation attempt.

Current protocols and standards relating to Long Term Evolution (LTE), Internet of Things (loT), Bluetooth Low Energy (BLE), Narrowband loT, Radio Resource Control (RRC), and/or 5G/New Radio (NR) do not provide any mechanism to overcome above-mentioned drawbacks.

In the following, embodiments where alternative approaches for remote update of devices are described.

A remote update of a device comprises an update of any one of software, firmware, and data etc. Hereinafter only the term 'update' will be used for consistency.

A software package comprises a package of any one of software, firmware, and data. Hereinafter only the term 'software package' will be used for consistency.

A device for remote update may comprise any one of an loT device, a sensor, and a WiFi hotspot. Hereinafter only the term 'device' will be used for consistency.

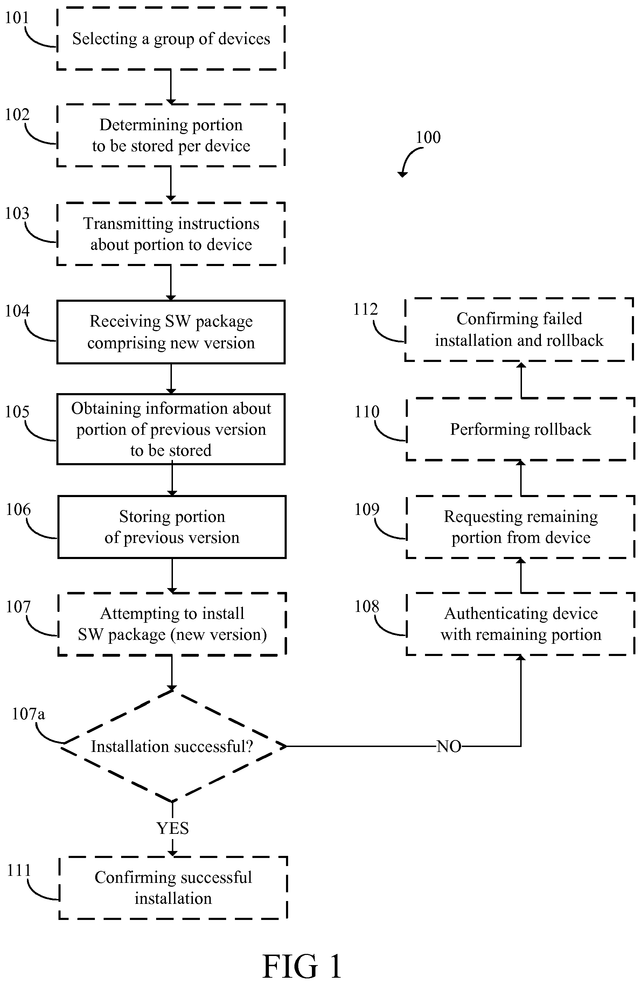

Figure 1 is a flowchart illustrating method steps of an example method 100 according to some embodiments. The method 100 is for remotely updating a plurality of devices wherein the plurality of devices form a distributed system for memory usage.

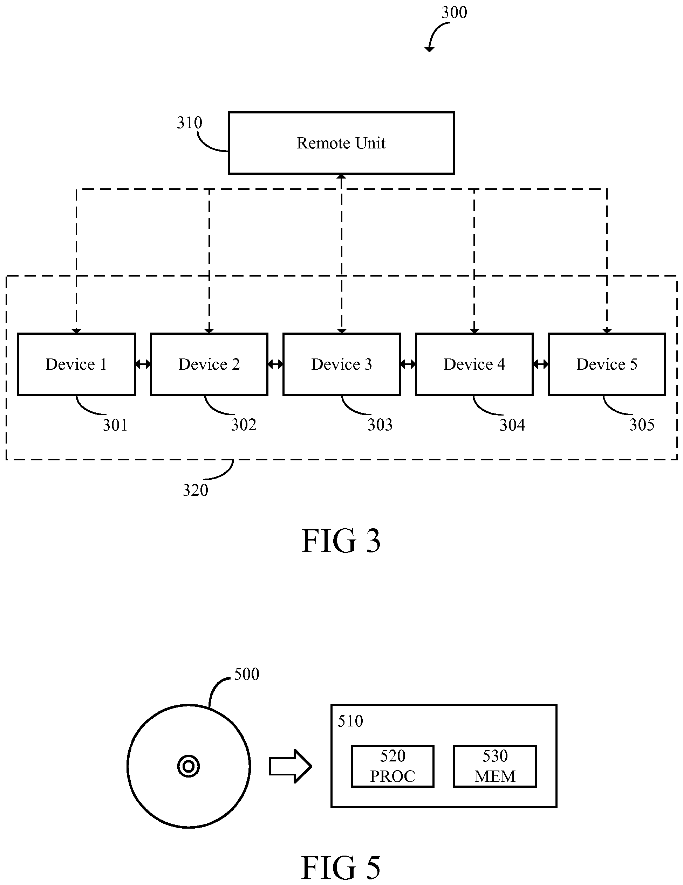

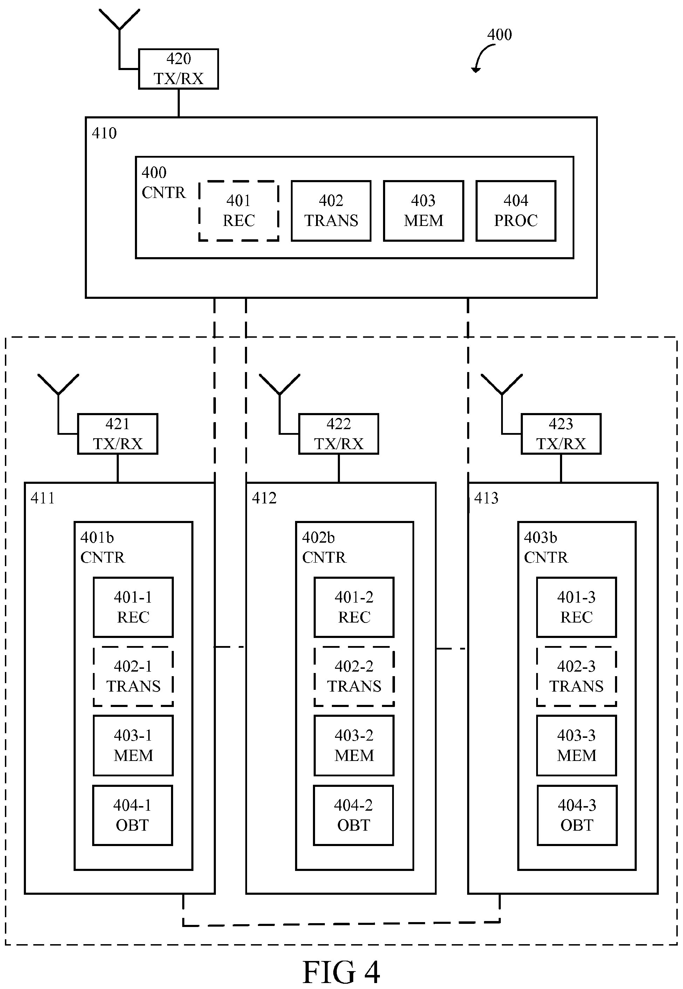

Thus, the method 100 is performed by the system 300 of Figure 3 and/or the apparatuses 400 of Figure 4 and/or the computer program product 500 of Figure 5.

For example, steps 101, 102, 103 are performed by a remote unit or by a device of the plurality of devices, and steps 104, 105, 106, 107, 107a, 108, 109, 110, 111, 112 are performed by one or more devices of the plurality of devices.

The method 100 comprises following steps.

In step 101, in some embodiments, a group of devices is selected for an update wherein the devices in the group each comprise a software image of a same current version of software executing in the devices.

For example, a group of related devices is selected for an update wherein the related devices comprise a same current version of software executing in the devices and wherein the related devices are capable of communicating with each other, either via a host protocol or another protocol interconnecting the related devices, e.g. BLE or any wireless communication protocol or even a wired connection.

In step 102, in some embodiments, one or more local portions of the software image is determined for a device of the group to store in memory.

For example, the one or more local portions of the software image may be determined according to a pre-determined scheme by a remote unit, i.e. controlled by the remote unit, or by the devices themselves, i.e. controlled autonomously by the related devices, e.g. five related devices may share the storing of the software image amongst them and hence only store a fifth, i.e. 1/5, of the software image per device according to the pre-determined scheme. Further, the pre-determined scheme in addition to determining the size of the local portion of the software image for each device to store also comprises determining what part of the software image each device should store.

Alternatively or additionally, the one or more local portions of the software image may, for example, be determined according to a negotiation process between the remote unit and the devices or between the devices themselves based on e.g. the memory capacity available in each device. Further, the negotiation process in addition to determining the size of the local portion of the software image for each device to store also comprises determining what part of the software image each device should store.

Alternatively or additionally, the one or more local portions of the software image may, for example, be determined according to a pre-configuration in the devices wherein the pre-configuration comprises information for the device to store one or more local portions of the software image wherein the related devices each have a corresponding pre-configuration. The pre-configuration for the related devices may be known amongst them e.g. device #1 being configured to store local portion #1 is aware that device #2 is configured to store local portion #2 either via signaling or via the pre-configuration etc.

Alternatively or additionally, an overview (i.e. a scheme) of software packages, versions of software executing in the devices, portions of software images, history of installation attempts may be comprised and maintained in the remote unit.

In step 103, in some embodiments, a signal is transmitted to the device comprising information about the one or more local portions of the software image to store.

For example, when the one or more local portions of the software image has been determined by the remote unit or by another device of the related devices i.e. determined by another entity than the device itself then a signal comprising information about the one or more local portions of the software image is transmitted to the device for informing the device about the one or more local portions of the software image to store.

In step 104, a software package is received at a first device of a plurality of devices, for an update from a remote unit.

The update may comprise an update over-the-air (OTA) according to the Open Mobile Alliance (OMA).

For example, the software package may comprise a new version of the software executing in the device i.e. a software update or a firmware update or a data update.

In step 105, information to store one or more local portions of a software image locally in the first device is obtained by the first device wherein the one or more local portions each comprises a defined portion of a current version of software executing in the first device.

For example, the information to store one or more local portions of the software image may, for example, be information indicative of the memory location of the one or more local portions and/or indicative of an instruction to store the one or more local portions at a certain memory location locally in the device.

For example, the obtaining may comprise, in the case of a pre-determined scheme or a negotiation process, receiving a signal from a remote unit or a related device comprising information regarding the one or more local portions of the software image. Further, in the case of a pre-configuration, the obtaining may comprise retrieving pre-configured information regarding the one or more local portions of the software image from one or more memory locations locally in the device.

In step 106, the one or more local portions of the software image is stored in memory of the first device.

For example, the one or more local portions of the software image may comprise one or more local portions of the software image in the device for roll-back purpose.

In step 107, in some embodiments, the received software package is attempted to be installed in the first device to implement the update.

For example, the device may attempt to perform the installation based on the received software package after the one or more local portions of the software image has been stored in the device.

In step 107a, in some embodiments, the attempt to install the received software package is determined to be successful or not.

For example, the installation attempt may be considered to be successful if no errors or warnings or any malfunction occur at completion of the installation and if errors or warnings or any malfunction occurs then the installation attempt may be considered to be not successful.

In step 111, in some embodiments, successful installation is confirmed to the remote unit when the installation attempt of the software package succeeded (YES-path out of step 107a).

For example, a message may be sent to the remote unit via a host protocol that the installation attempt was successful.

In step 108, in some embodiments, the one or more second devices comprising the one or more remaining portion of the software image is authenticated by the first device when the attempt to install the received software package failed (NO-path out of step 107a).

For example, the one or more second devices comprising the one or more remaining portion of the software image are authenticated by the first device via an authentication protocol in order to verify that the correct second device is in communication with the first device for a request of the one or more remaining portion of the software image so that non-compatible or corrupt software/firmware/data is avoided.

In step 109, in some embodiments, the one or more remaining portion of the software image is requested by the first device from the one or more second devices comprising the one or more remaining portion of the software image when the authentication is successful.

For example, when the authentication has been successful the first device requests the one or more remaining portions of the software image from the authenticated second device comprising the one or more remaining portions of the software image via a host protocol or another protocol interconnecting the related devices, e.g. BLE or any wireless communication protocol or even a wired connection.

In some embodiments, the one or more remaining portion of the software image is requested from the one or more second devices in a sequential manner so that the one or more remaining portion are requested sequentially per second device from the plurality of devices or in a broadcasted manner so that the one or more remaining portion are requested from the one or more second devices at the same time from the plurality of devices.

For example, the one or more remaining portions of the software image may be requested sequentially i.e. via an individual request per second device or by a broadcasted request i.e. via one request to all related devices at the same time wherein the choice of sequential or broadcasted request depends on the type of connectivity amongst the related devices.

If no response to the request is received, then retrieval of the previous version fails. Redundancy can be increased if more than one device stores the same portion. If a certain portion cannot be retrieved from a second device, then the other second device(s) storing the same portion can be requested.

If no response to the request is received, then the request may be retransmitted a certain number of times. If no response is received, then retrieval of the previous version fails. Redundancy can be increased if more than one device stores the same portion. Hence, more than one second device may respond with the same portion and the first device will only store one of the responses for each portion of the software image of the previous version.

In step 110, in some embodiments, rollback to the software image based on the one or more local portions of the software image stored in the first device and one or more remaining portion of the software image is performed when the update fails by requesting the one or more remaining portion of the software image from one or more second devices of the plurality of devices and reinstalling a re-assembled software image in the first device.

For example, in case of errors/warnings/malfunction of the installed software package a rollback may be performed to restore the previous version. The rollback requires that all portions of the software image of the previous version to be re-assembled in the device which is to perform the rollback by requesting the one or more remaining portions of the software image of the previous version from the related devices. Once all portions of the software image of the previous version are obtained/received, the re-assembling of the software image of the previous version is completed and the previous version is reinstalled in the device.

In step 112, in some embodiments, fail and rollback is confirmed to the remote unit when the installation attempt of the software package failed and rollback was performed.

For example, a message may be sent to the remote unit via a host protocol that the installation attempt was not successful and that a rollback to the previous version was performed with the help of the related devices comprising one or more remaining portions of the software image of the previous version.

In some embodiments, at least one device of the plurality of devices is acting as a relay node for transmission of signals to and from at least one device of the plurality of devices.

For example, one device of the related devices may act as a relay node for transmitting a signal from the remote unit to the related devices comprising information about the one or more local portions of the software image to store.

In some embodiments, the at least one device of the plurality of devices comprises any one of an Internet of Things device, a sensor, and a WiFi hotspot.

In some embodiments, the devices in the distributed system communicate with each other over a short-range wireless communication protocol or a wired connection.

One or more of the above method steps may be iterated when an installation attempt has failed and a rollback has been performed.

Above selection of the group of devices, in step 101, may comprise selecting those devices wherein the installation attempt has failed and a rollback has been performed.

An advantage of some embodiments is that alternative approaches for remote update of devices are provided.

Another advantage of some embodiments is that when applying the resource-saving update approach, less memory capacity is required in a device for storing the previous version for roll-back purposes.

Yet an advantage of some embodiments is that, even if the size of the update, i.e. the software package to be installed, grows over time, the device can still manage the storing of the previous version for roll-back purposes without increasing the memory capacity of the device and more devices, if possible, may be involved in the storing of the previous version.

Yet another advantage of some embodiments is that a secure distributed system for memory usage is provided.

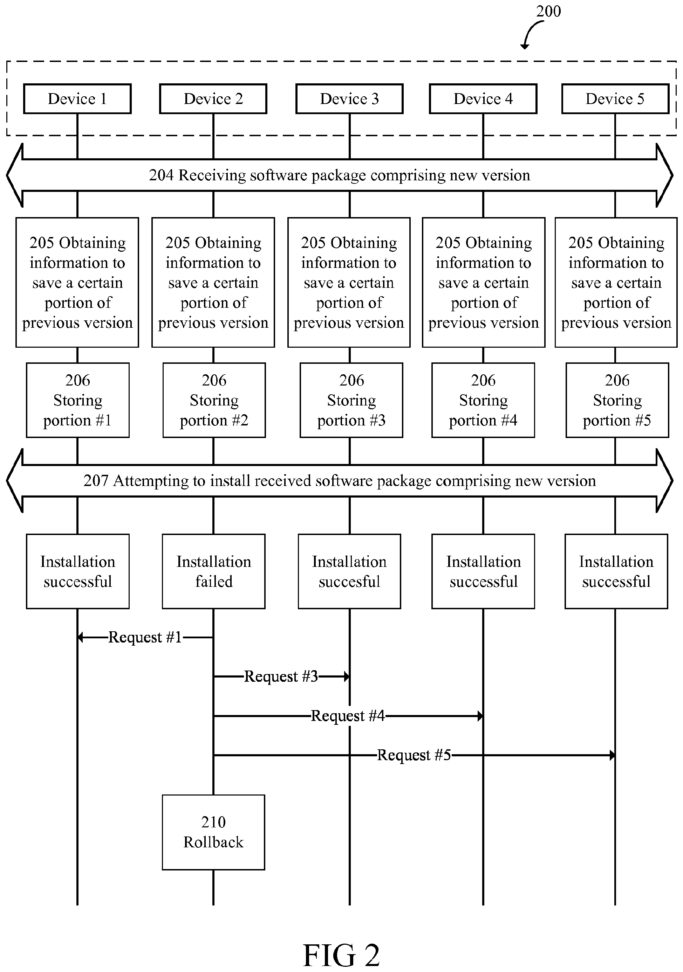

Figure 2 is a sequence diagram illustrating signaling steps of an example signaling 200 according to some embodiments. The signaling 200 is for remotely updating a plurality of devices wherein the plurality of devices form a distributed system for memory usage.

Thus, the signaling 200 is performed by the system 300 of Figure 3 and/or the apparatuses 400 of Figure 4 and/or the computer program product 500 of Figure 5.

Figure 2 illustrates a selected group of related devices, Devices 1-5, for a remote update wherein the devices form a distributed system for memory usage.

The signaling 200 comprises following steps.

In step 204, corresponding to step 104 of the method 100 illustrated in Figure 1, a software package is received at each of the devices for an update from a remote unit.

In step 205, corresponding to step 105 of the method 100 illustrated in Figure 1, information to store one or more local portions of a software image locally in each of the devices is obtained by the devices wherein the one or more local portions each comprises a defined portion of a current version of software executing in the devices.

In step 206, corresponding to step 106 of the method 100 illustrated in Figure 1, the one or more local portions of the software image is stored in memory of each of the devices.

In step 207, corresponding to step 107 of the method 100 illustrated in Figure 1, in some embodiments, the received software package is attempted to be installed in each of the devices to implement the update.

In step 210, corresponding to step 110 of the method 100 illustrated in Figure 1, in some embodiments, rollback to the software image based on the one or more local portions of the software image stored in each of the devices and one or more remaining portion of the software image is performed when the update fails by requesting the one or more remaining portion of the software image from one or more second devices of the plurality of devices and reinstalling a re-assembled software image in the first device.

For Device 2 the installation attempt was not successful as the installation failed while for Devices 1, 3, 4, 5 the installation attempt was successful. For Device 2 a rollback to the software image of the previous image is performed by requesting the remaining portions of the software image, i.e. portions 1, 3, 4, 5, from the related Devices 1, 3, 4, 5 sequentially. Once all portions of the software image of the previous version have been obtained/received, the re-assembling of the software image is performed and the re-assembled software image is reinstalled in Device 2.

Figure 3 is a schematic overview illustrating devices in an example system 300 according to some embodiments. The system 300 is for remotely updating a plurality of devices wherein the plurality of devices form a distributed system for memory usage.

Thus, the system 300 may, for example, perform the method steps described in connection with Figure 1 and signaling steps described in connection with Figure 2 or otherwise described herein.

Figure 3 illustrates a selected group of related devices, Devices 1-5, for a remote update wherein the devices form a distributed system for memory usage.

The system 300 comprises a remote unit 310 and a selected group of related devices 320 further comprising "Device 1" 301, "Device 2" 302, "Device 3" 303, "Device 4" 304, and "Device 5" 305.

The system 300 is configured to remotely update the selected group of related devices 320.

A remote unit 310 sends a software package to each of the devices 301, 302, 303, 304, 305.

This may be preceded by a notification from the remote unit 310 to the selected group of devices 320 that a new version of the software/firmware/data is available or the devices 301, 302, 303, 304, 305 of the selected group of devices 320 may detect that a new version of the software/firmware/data is available. The update may be mandatory to accept, or the selected group of devices 320 comprising devices 301, 302, 303, 304, 305 may have the option to request the update at a later occasion.

Before installation of the received software package at each of the devices 301, 302, 303, 304, 305, the devices 301, 302, 303, 304, 305 obtain information on what portion(s) of the software image of the current version of software executing in the devices each device should store.

The obtainment of information on what portion(s) of the software image of the current version of software executing in the devices to store may comprise a pre-determined scheme, or a negotiation process between the remote unit and the devices or amongst the devices themselves or a pre-configuration in the devices.

For example, a pre-determined scheme may comprise each device storing an equal part of the software image where e.g. the lowest device ID stores the lowest memory part of the software image.

In case there is an error in the reception of the software package or if the device does not have the memory capacity to store the one or more local portions of the software image then the device is excluded from the group of related devices and a new group of related devices is selected.

Once one or more local portions of the software image is locally stored in each device an attempt to install the software package may be performed.

In case the installation attempt fails, the failing device will collect the one or more remaining portions of the software image for the previous version from the related devices to restore, i.e. reassemble and reinstall, the previous version.

The system 300 further illustrates the remote unit 310 being in communication with the selected group of related devices 320 utilizing e.g. a long-range wireless communications protocol via a transceiver type 1.

The related devices 301, 302, 303, 304, 305 may communicate with each other also utilizing e.g. a short-range wireless communications protocol or a wired connection via a transceiver type 2.

It may also be so that only one device of the related devices 301, 302, 303, 304, 305 also operates a long-range transceiver of transceiver type 1 and acts as a relay node for the other related devices only operating a short-range transceiver type 2.

Figure 4 is a schematic block diagram illustrating example apparatuses according to some embodiments. The example apparatuses 410, corresponding to 310 of Figure 3, 401b, corresponding to 301 of Figure 3, 402b corresponding to 302 of Figure 3, and 403b, corresponding to 303 of Figure 3, are for remotely updating a plurality of devices wherein the plurality of devices form a distributed system for memory usage.

Thus, the apparatuses 410, 401, 402, and 403 may, for example, perform the method steps described in connection with Figure 1 and signaling steps described in connection with Figure 2 or otherwise described herein.

The apparatus 410 comprises device controlling circuitry (CNTR) 400, which may in turn, in some embodiments, comprise a receiving module (REC) 401, e.g. receiving circuitry or receiving module, configured to receive, a confirmation of successful or non-successful installation attempt of a software package from the apparatuses 411, 412, 413, and a transmitting module (TRANS) 402, e.g. transmitting circuitry or transmitting module, configured to transmit a signal to each of the apparatuses 411, 412, 413 of the group of apparatuses 411, 412, 413 comprising information about one or more local respective portion of the software image to be stored.

The CNTR 400 further comprises a storing module (MEM) 403, e.g. memory circuitry or memory module, configured to store one or more software packages and a processing module (PROC) 404, e.g. processing circuitry or processing module, configured to perform selection of a group of apparatuses 411, 412, 413 for an update wherein the apparatuses 411, 412, 413 in the group comprise a software image of a same current version of software executing in the apparatuses 411, 412, 413 and determination of one or more respective local portion of the software image for each of the apparatuses 411, 412, 413 of the group to store in memory.

The CNTR 400 furthermore comprises a transmitting module (TRANS) 402, e.g. transmitting circuitry or transmitting module, configured to transmit signals to each of the apparatuses 411, 412, 413 of the group comprising information about the local respective portion of the software image.

The apparatus 410 may even further comprise a transceiving module (TX/RX) 420, e.g. transceiving circuitry or transceiving module, configured to transceive, i.e. transmit and/or receive, signals comprising information to and from the apparatuses 411, 412, 413 over a long-range wireless communication protocol.

The apparatuses 411, 412, 413 each comprise device controlling circuitry (CNTR) 401b, 402b, 403b, which may in turn, each comprise a receiving module (REC) 401-1, 401-2, 401-3, e.g. receiving circuitry or receiving module, configured to receive a software package for an update from apparatus 410, and, in some embodiments, a transmitting module (TRANS) 402-1, 402-2, 402-3, e.g. transmitting circuitry or transmitting module, configured to transmit a confirmation of successful or non-successful installation attempt of a software package in the apparatuses 411, 412, 413 to the apparatus 410.

The CNTR 401b, 402b, 403b each further comprise a storing module (MEM) 403-1, 403-2, 403-3, e.g. memory circuitry or memory module, configured to store one or more local portions of the software image and an obtaining module (OBT) 404-1, 404-2, 404-3, e.g. obtaining circuitry or obtaining module, configured to obtain information to store one or more local portions of the software image locally in the apparatuses 411, 412, 413 wherein the one or more local portions each comprises a defined portion of a current version of software executing in the apparatuses 411, 412, 413.

The apparatuses 411, 412, 413 may each further comprise a transceiving module (TX/RX) 421, 422, 423, e.g. transceiving circuitry or transceiving module, configured to transceive, i.e. transmit and/or receive, signals comprising information to and from the apparatuses 410, 411, 412, 413 over a short-range and/or long-range wireless communication protocol.

The system 400 further illustrates the apparatus 410, i.e. the remote unit, being in communication with the apparatuses 411, 412, 413, i.e. the selected group of related devices, utilizing e.g. a long-range wireless communications protocol via a transceiver type adapted for long-range wireless communication protocol or a wired connection.

Further, the apparatuses 411, 412, 413, i.e. the selected group of related devices, may communicate with each other also utilizing e.g. a short-range wireless communications protocol via a transceiver type adapted for short-range wireless communication protocol or a wired connection.

It may also be so that only one apparatus of the apparatuses 411, 412, 413 also operates a long-range transceiver and acts as a relay node for the other apparatuses 411, 412, 413 only operating short-range transceivers.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a wireless communication device.

Embodiments may appear within an electronic apparatus (such as a wireless communication device) comprising arrangements, circuitry, and/or logic according to any of the embodiments described herein. Alternatively or additionally, an electronic apparatus (such as a wireless communication device) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a wireless communication device 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the method illustrated in Figure 1 or signaling steps according to, for example, any of the signaling illustrated in Figure 2 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for remotely updating a plurality of devices (320) wherein the plurality of devices form a distributed system for memory usage, the method comprising the following steps:
receiving (104), at a first device of the plurality of devices, a software package for any of a software update, a firmware update or a data update from a remote unit,
obtaining (105), by the first device, in a signal from the remote unit, information to store a local portion of a software image, of a current version of software executing in the first device, locally in the first device wherein the local portion consists of a defined portion of a current version of the software image,
storing (106), in the first device, the local portion of the software image in memory, and
performing an attempt to install (107) the received software package in the first device to implement any of a software update, a firmware update or a data update,
obtaining, by the first device, in the signal from the remote unit, information about the one or more remaining portion of the software image and their storage in the distributed system, and
when the attempt to install the received software package fails, performing rollback (110) to the software image based on the local portion of the software image stored in the first device and one or more remaining portion of the software image by requesting the one or more remaining portion of the software image from one or more second devices of the plurality of devices and reinstalling a re-assembled software image in the first device.

2. The method according to claim 1, further comprising the step of:
authenticating (108), by the first device, the one or more second devices comprising the one or more remaining portion of the software image.

3. The method according to any of claims 1-2, further comprising the step of:
requesting (109), by the first device, the one or more remaining portion of the software image from the one or more second devices comprising the one or more remaining portion of the software image when the authentication is successful.

4. The method according to any of claims 1-3, further comprising the steps of:
confirming (112) installation failure and rollback to the remote unit when the installation attempt of the software package failed and rollback was performed.

5. The method according to any of claims 1-4, wherein at least one device of the plurality of devices (320) acts as a relay node for transmission of signals to and from at least one device of the plurality of devices.

6. The method according to any of claims 1-5, wherein the devices in the distributed system (320) communicate with each other over a short-range wireless communication protocol or a wired connection.

7. A method for remotely updating a plurality of devices (320) wherein the plurality of devices form a distributed system for memory usage, the method comprising the following steps:
selecting (101) a group of first devices for an update wherein the first devices in the group each comprise a software image of a same current version of software executing in the devices,
determining (102) a local portion of the software image for a first device of the group to store in memory,
transmitting (103) a signal to the first device comprising information about the local portion of the software image to store, and
executing the determining and the transmitting steps for each first device in the group of devices, wherein the method further comprises each first device performing the method of claim 1.

8. The method according to claim 7, wherein the selecting (101), determining (102), and transmitting (103) steps are performed by a remote unit (310).

9. The method according to claim 8, wherein the remote unit (310) comprises a host (310) or a host comprising a server.

10. The method according to claim 9, wherein the host (310) and at least one device in the distributed system (320) communicate with each other over a long-range wireless communication protocol or a wired connection.

11. An remote unit (310) (310, 410, 411, 412, 413) configured for remotely updating a plurality of devices according to claim 15, wherein the plurality of devices form a distributed system for memory usage, the apparatus comprising controlling circuitry (400) configured to cause:
selection (101) of a group of devices for an update wherein the devices in the group comprise a software image of a same current version of software executing in the devices,
determination (102) of a respective local portion of the software image for each of the devices of the group to store in memory, and
transmission (103) of a signal to each of the devices of the group comprising information about the local respective portion of the software image.

12. The remote unit (310) according to claim 11, wherein the one or more local portions of the software image comprises a portion of a binary image installed in the memory of the device.

13. The remote unit (310) according to claim 12, wherein the portion of the binary image is a coherent or a non-coherent portion in memory.

14. The remote unit (310) according to any of claims 11-13, wherein the selection (101) of the group of devices further comprises selecting devices of same or of different type comprising the same current version of software executing in the devices and wherein the devices are capable of communicating with each other.

15. A first device (301) configured for remote updating wherein the first device forms part of a distributed system for memory usage, the first device comprising controlling circuitry configured to cause:
reception of a software package (104) for any of a software update, a firmware update or a data update from a remote unit,
obtaining from the remote unit, information to store a local portion of a software image, of a current version of software executing in the first device, locally in the first device wherein the local portion consists of a defined portion of a current version of the software image, and
storage (106) of the local portion of the software image in memory,
an attempt to install (107) the received software package in the first device to implement any of a software update, a firmware update or a data update,
obtainment, by the first device, in the signal from the remote unit, information about the one or more remaining portion of the software image and their storage in the distributed system, and
when the attempt to install the received software package fails, to perform a rollback (110) to the software image based on the local portion of the software image stored in the first device and one or more remaining portion of the software image by requesting the one or more remaining portion of the software image from one or more second devices of the plurality of devices and reinstalling a re-assembled software image in the first device.

## Patentansprüche

1. Verfahren zum Fernaktualisieren einer Vielzahl von Vorrichtungen (320), wobei die Vielzahl von Vorrichtungen ein verteiltes System zur Speichernutzung bildet, wobei das Verfahren die folgenden Schritte umfasst:
Empfangen (104) eines Softwarepakets für eines von einem Software-Update, einem Firmware-Update oder einem Daten-Update von einer Ferneinheit auf einer ersten Vorrichtung der Vielzahl von Vorrichtungen,
Erhalten (105), durch die erste Vorrichtung in einem Signal von der Ferneinheit, von Informationen zum lokalen Speichern, auf der ersten Vorrichtung, eines lokalen Teils eines Software-Images einer aktuellen Version einer auf der ersten Vorrichtung ausgeführten Software, wobei der lokale Teil aus einem definierten Teil einer aktuellen Version des Software-Images besteht,
Speichern (106) des lokalen Teils des Software-Images im Speicher auf der ersten Vorrichtung und
Durchführen eines Versuchs zum Installieren (107) des empfangenen Softwarepakets auf der ersten Vorrichtung, um eines von einem Software-Update, einem Firmware-Update oder einem Daten-Update zu implementieren,
Erhalten von Informationen über den einen oder die mehreren verbleibenden Teile des Software-Images und deren Speicherung im verteilten System durch die erste Vorrichtung im Signal von der Ferneinheit und
wenn der Versuch, das empfangene Softwarepaket zu installieren, fehlschlägt, Durchführen eines Rollbacks (110) auf das Software-Image basierend auf dem lokalen Teil des Software-Images, der auf der ersten Vorrichtung gespeichert ist, und einem oder mehreren verbleibenden Teilen des Software-Images durch Anfordern des einen oder der mehreren verbleibenden Teile des Software-Images von einer oder mehreren zweiten Vorrichtungen der Vielzahl von Vorrichtungen und Neuinstallieren eines neu zusammengestellten Software-Images auf der ersten Vorrichtung.

2. Verfahren nach Anspruch 1, weiter umfassend den folgenden Schritt:
Authentifizieren (108) der einen oder der mehreren zweiten Vorrichtungen, die den einen oder die mehreren verbleibenden Teile des Software-Images umfassen, durch die erste Vorrichtung.

3. Verfahren nach einem der Ansprüche 1-2, weiter umfassend den folgenden Schritt:
Anfordern (109) des einen oder der mehreren verbleibenden Teile des Software-Images durch die erste Vorrichtung von der einen oder den mehreren zweiten Vorrichtungen, die den einen oder die mehreren verbleibenden Teile des Software-Images umfassen, wenn die Authentifizierung erfolgreich ist.

4. Verfahren nach einem der Ansprüche 1-3, weiter umfassend die folgenden Schritte:
Bestätigen (112) eines Installationsfehlers und eines Rollbacks an die Ferneinheit, wenn der Installationsversuch des Softwarepakets fehlgeschlagen ist und ein Rollback durchgeführt wurde.

5. Verfahren nach einem der Ansprüche 1-4, wobei mindestens eine Vorrichtung der Vielzahl von Vorrichtungen (320) als Relaisknoten zur Übertragung von Signalen zu und von mindestens einer Vorrichtung der Vielzahl von Vorrichtungen fungiert.

6. Verfahren nach einem der Ansprüche 1-5, wobei die Vorrichtungen im verteilten System (320) über ein drahtloses Nahbereichskommunikationsprotokoll oder eine drahtgebundene Verbindung miteinander kommunizieren.

7. Verfahren zum Fernaktualisieren einer Vielzahl von Vorrichtungen (320), wobei die Vielzahl von Vorrichtungen ein verteiltes System zur Speichernutzung bildet, wobei das Verfahren die folgenden Schritte umfasst:
Auswählen (101) einer Gruppe erster Vorrichtungen für eine Aktualisierung, wobei die ersten Vorrichtungen in der Gruppe jeweils ein Software-Image einer gleichen aktuellen Version einer auf den Vorrichtungen ausgeführten Software umfassen,
Bestimmen (102) eines lokalen Teils des Software-Images für eine erste Vorrichtung der Gruppe, der im Speicher gespeichert werden soll,
Übertragen (103) eines Signals an die erste Vorrichtung, das Informationen über den zu speichernden lokalen Teil des Software-Images umfasst, und
Ausführen der Bestimmungs- und Übertragungsschritte für jede erste Vorrichtung in der Gruppe von Vorrichtungen, wobei das Verfahren weiter umfasst, dass jede erste Vorrichtung das Verfahren nach Anspruch 1 durchführt.

8. Verfahren nach Anspruch 7, wobei die Schritte des Auswählens (101), Bestimmens (102) und Übertragens (103) von einer Ferneinheit (310) durchgeführt werden.

9. Verfahren nach Anspruch 8, wobei die Ferneinheit (310) einen Host (310) oder einen Host umfasst, der einen Server umfasst.

10. Verfahren nach Anspruch 9, wobei der Host (310) und mindestens eine Vorrichtung im verteilten System (320) über ein drahtloses Langstreckenkommunikationsprotokoll oder eine drahtgebundene Verbindung miteinander kommunizieren.

11. Ferneinheit (310) (310, 410, 411, 412, 413), die zum Fernaktualisieren einer Vielzahl von Vorrichtungen nach Anspruch 15 konfiguriert ist, wobei die Vielzahl von Vorrichtungen ein verteiltes System zur Speichernutzung bildet, wobei die Einrichtung eine Steuerschaltung (400) umfasst, die konfiguriert ist, um Folgendes zu bewirken:
Auswahl (101) einer Gruppe von Vorrichtungen für eine Aktualisierung, wobei die Vorrichtungen in der Gruppe ein Software-Image einer gleichen aktuellen Version der auf den Vorrichtungen ausgeführten Software umfassen,
Bestimmung (102) eines jeweiligen lokalen Teils des Software-Images für jedes der Vorrichtungen der Gruppe, der im Speicher gespeichert werden soll, und
Übertragung (103) eines Signals an jede der Vorrichtungen der Gruppe, das Informationen über den jeweiligen lokalen Teil des Software-Images umfasst.

12. Ferneinheit (310) nach Anspruch 11, wobei der eine oder die mehreren lokalen Teile des Software-Images einen Teil eines im Speicher der Vorrichtung installierten binären Bilds umfassen.

13. Ferneinheit (310) nach Anspruch 12, wobei der Teil des binären Bilds ein kohärenter oder ein nicht kohärenter Teil im Speicher ist.

14. Ferneinheit (310) nach einem der Ansprüche 11-13, wobei die Auswahl (101) der Gruppe von Vorrichtungen weiter Auswählen von Vorrichtungen des gleichen oder eines anderen Typs umfasst, die dieselbe aktuelle Version der auf den Vorrichtungen ausgeführten Software umfassen, und wobei die Vorrichtungen in der Lage sind, miteinander zu kommunizieren.

15. Erste Vorrichtung (301), die zum Fernaktualisieren konfiguriert ist, wobei die erste Vorrichtung Teil eines verteilten Systems zur Speichernutzung bildet, wobei die erste Vorrichtung eine Steuerschaltung umfasst, die konfiguriert ist, um Folgendes zu bewirken:
Empfang eines Softwarepakets (104) für eines von einem Software-Update, einem Firmware-Update oder einem Daten-Update von einer Ferneinheit,
Erhalten von Informationen von der Ferneinheit zum Speichern eines lokalen Teils eines Software-Images einer aktuellen Version einer auf der ersten Vorrichtung ausgeführten Software,
lokal in der ersten Vorrichtung, wobei der lokale Teil aus einem definierten Teil einer aktuellen Version des Software-Images besteht, und
Speicherung (106) des lokalen Teils des Software-Images im Speicher,
einen Versuch, das empfangene Softwarepaket auf der ersten Vorrichtung zu installieren (107), um eines von einem Software-Update, einem Firmware-Update oder einem Daten-Update zu implementieren,
Erhalten von Informationen über den einen oder die mehreren verbleibenden Teile des Software-Images und deren Speicherung im verteilten System durch die erste Vorrichtung im Signal von der Ferneinheit und
wenn der Versuch, das empfangene Softwarepaket zu installieren, fehlschlägt, ein Rollback (110) auf das Software-Image, basierend auf dem lokalen Teil des Software-Images, der auf der ersten Vorrichtung gespeichert ist, und einem oder mehreren verbleibenden Teilen des Software-Images durchzuführen, indem der eine oder die mehreren verbleibenden Teile des Software-Images von einer oder mehreren zweiten Vorrichtungen der Vielzahl von Vorrichtungen angefordert werden und ein neu zusammengestelltes Software-Image auf der ersten Vorrichtung neu installiert wird.

## Revendications

1. Procédé de mise à jour à distance d'une pluralité de dispositifs (320), dans lequel la pluralité de dispositifs forment un système distribué pour une utilisation de mémoire, le procédé comprenant les étapes suivantes :
la réception (104), au niveau d'un premier dispositif de la pluralité de dispositifs, d'un progiciel pour une quelconque parmi une mise à jour de logiciel, une mise à jour de micrologiciel ou une mise à jour de données à partir d'une unité distante,
l'obtention (105), par le premier dispositif, dans un signal provenant de l'unité distante, d'informations pour stocker une partie locale d'une image de logiciel, d'une version actuelle du logiciel s'exécutant dans le premier dispositif, localement dans le premier dispositif, dans lequel la partie locale consiste en une partie définie d'une version actuelle de l'image de logiciel,
le stockage (106), dans le premier dispositif, de la partie locale de l'image de logiciel en mémoire, et
la réalisation d'une tentative d'installation (107) du progiciel reçu dans le premier dispositif pour mettre en œuvre une quelconque parmi une mise à jour de logiciel, une mise à jour de micrologiciel ou une mise à jour de données,
l'obtention, par le premier dispositif, dans le signal provenant de l'unité distante, d'informations concernant les une ou plusieurs parties restantes de l'image de logiciel et leur stockage dans le système distribué, et
lorsque la tentative d'installation du progiciel reçu échoue, la réalisation d'un retour arrière (110) à l'image de logiciel sur la base de la partie locale de l'image de logiciel stockée dans le premier dispositif et d'une ou plusieurs parties restantes de l'image de logiciel en demandant les une ou plusieurs parties restantes de l'image de logiciel à un ou plusieurs seconds dispositifs de la pluralité de dispositifs et en réinstallant une image de logiciel réassemblée dans le premier dispositif.

2. Procédé selon la revendication 1, comprenant en outre l'étape de :
authentification (108), par le premier dispositif, des un ou plusieurs seconds dispositifs comprenant les une ou plusieurs parties restantes de l'image de logiciel.

3. Procédé selon l'une quelconque des revendications 1-2, comprenant en outre l'étape de :
demande (109), par le premier dispositif, des une ou plusieurs parties restantes de l'image de logiciel aux un ou plusieurs seconds dispositifs comprenant les une ou plusieurs parties restantes de l'image de logiciel lorsque l'authentification est réussie.

4. Procédé selon l'une quelconque des revendications 1-3, comprenant en outre les étapes de :
confirmation (112) de l'échec d'installation et le retour arrière auprès de l'unité distante lorsque la tentative d'installation du progiciel a échoué et que le retour arrière a été effectué.

5. Procédé selon l'une quelconque des revendications 1-4, dans lequel au moins un dispositif de la pluralité de dispositifs (320) agit comme un nœud relais pour une transmission de signaux vers et depuis au moins un dispositif de la pluralité de dispositifs.

6. Procédé selon l'une quelconque des revendications 1-5, dans lequel les dispositifs dans le système distribué (320) communiquent les uns avec les autres via un protocole de communication sans fil à courte portée ou une connexion filaire.

7. Procédé de mise à jour à distance d'une pluralité de dispositifs (320), dans lequel la pluralité de dispositifs forment un système distribué pour une utilisation de mémoire, le procédé comprenant les étapes suivantes :
la sélection (101) d'un groupe de premiers dispositifs pour une mise à jour, dans lequel les premiers dispositifs du groupe comprennent chacun une image de logiciel d'une même version actuelle du logiciel s'exécutant dans les dispositifs,
la détermination (102) d'une partie locale de l'image de logiciel pour un premier dispositif du groupe à stocker en mémoire,
la transmission (103) d'un signal au premier dispositif comprenant des informations concernant la partie locale de l'image de logiciel à stocker, et
l'exécution des étapes de détermination et de transmission pour chaque premier dispositif du groupe de dispositifs, dans lequel le procédé comprenant en outre une exécution par chaque premier dispositif du procédé selon la revendication 1.

8. Procédé selon la revendication 7, dans lequel les étapes de sélection (101), de détermination (102) et de transmission (103) sont effectuées par une unité distante (310).

9. Procédé selon la revendication 8, dans lequel l'unité distante (310) comprend un hôte (310) ou un hôte comprenant un serveur.

10. Procédé selon la revendication 9, dans lequel l'hôte (310) et au moins un dispositif dans le système distribué (320) communiquent l'un avec l'autre via un protocole de communication sans fil à longue portée ou une connexion filaire.

11. Unité distante (310) (310, 410, 411, 412, 413) configurée pour mettre à jour à distance une pluralité de dispositifs selon la revendication 15, dans laquelle la pluralité de dispositifs forment un système distribué pour une utilisation de mémoire, l'appareil comprenant des circuits de commande (400) configurés pour provoquer :
une sélection (101) d'un groupe de dispositifs pour une mise à jour, dans laquelle les dispositifs du groupe comprennent une image de logiciel d'une même version actuelle du logiciel s'exécutant dans les dispositifs,
une détermination (102) d'une partie locale respective de l'image de logiciel pour chacun des dispositifs du groupe à stocker en mémoire, et
une transmission (103) d'un signal à chacun des dispositifs du groupe comprenant des informations concernant la partie locale respective de l'image de logiciel.

12. Unité distante (310) selon la revendication 11, dans laquelle les une ou plusieurs parties locales de l'image de logiciel comprennent une partie d'une image binaire installée dans la mémoire du dispositif.

13. Unité distante (310) selon la revendication 12, dans laquelle la partie de l'image binaire est une partie cohérente ou non cohérente en mémoire.

14. Unité distante (310) selon l'une quelconque des revendications 11-13, dans laquelle la sélection (101) du groupe de dispositifs comprend en outre une sélection de dispositifs de même type ou d'un type différent comprenant la même version actuelle du logiciel s'exécutant dans les dispositifs, et dans laquelle les dispositifs sont aptes à communiquer les uns avec les autres.

15. Premier dispositif (301) configuré pour une mise à jour à distance, dans lequel le premier dispositif fait partie d'un système distribué pour une utilisation de mémoire, le premier dispositif comprenant des circuits de commande configurés pour provoquer :
une réception d'un progiciel (104) pour une quelconque parmi une mise à jour de logiciel, une mise à jour de micrologiciel ou une mise à jour de données à partir d'une unité distante,
une obtention, à partir de l'unité distante, d'informations pour stocker une partie locale d'une image de logiciel, d'une version actuelle du logiciel s'exécutant dans le premier dispositif,
localement dans le premier dispositif, dans lequel la partie locale consiste en une partie définie d'une version actuelle de l'image de logiciel, et
un stockage (106) de la partie locale de l'image de logiciel en mémoire,
une tentative d'installation (107) du progiciel reçu dans le premier dispositif pour mettre en œuvre une quelconque parmi une mise à jour de logiciel, une mise à jour de micrologiciel ou une mise à jour de données,
une obtention, par le premier dispositif, dans le signal provenant de l'unité distante, d'informations concernant les une ou plusieurs parties restantes de l'image de logiciel et leur stockage dans le système distribué, et
lorsque la tentative d'installation du progiciel reçu échoue, une réalisation d'un retour arrière (110) à l'image de logiciel sur la base de la partie locale de l'image de logiciel stockée dans le premier dispositif et d'une ou plusieurs parties restantes de l'image de logiciel en demandant les une ou plusieurs parties restantes de l'image de logiciel à un ou plusieurs seconds dispositifs de la pluralité de dispositifs et en réinstallant une image de logiciel réassemblée dans le premier dispositif.
